# EUROPEAN PATENT APPLICATION

(11) **EP 4 378 297 A1**
(43) Date of publication of application: **05.06.2024**
(21) Application number: 22848714.6
(22) Date of filing: 01.08.2022
(51) Int. Cl.: A01D 34/412

(54) **AUTOMATIC LAWN MOWER**

(30) Priority: 30.07.2021 CN 202121765068 U; 30.07.2021 CN 202121765096 U; 30.07.2021 CN 202110874850
(71) Applicant: Positec Power Tools (Suzhou) Co., Ltd., Suzhou, Jiangsu 215123 (CN)
(72) Inventor: ZHOU, Xiaoqing, Suzhou, Jiangsu 215123 (CN); ZHA, Xiahong, Suzhou, Jiangsu 215123 (CN); ZHAO, Fengli, Suzhou, Jiangsu 215123 (CN); JIAO, Shiping, Suzhou, Jiangsu 215123 (CN); SUN, Xifeng, Suzhou, Jiangsu 215123 (CN)
(74) Representative: Kilburn & Strode LLP
(86) International application number: PCT/CN2022/109376
(87) International publication number: WO 2023/006110

(57) **Abstract**

The present invention discloses an automatic lawn mower, including: a body, where the body includes a cutting mechanism including a cutting element configured to perform a working task; a first shield, connected to the body, where in a natural state, a distance X1 between at least a part of a bottom edge of the first shield and a working surface meets: X1≥60 mm; and a second shield, connected to the body and configured to extend towards the working surface to protect the cutting element, where in the natural state, a lowest point of the second shield is lower than the first shield, and a distance Y1 between the lowest point and the working surface meets: Y1≤75 mm; and the second shield is configured to move in a direction away from the working surface when a received external force is greater than a set value. According to the lawn mower in the present invention, resistance of dense grass to the machine when the machine works in high-density grass can be reduced, and the passability of the machine is improved. In addition, people's hands or feet can be blocked from entering a lower part of the machine, thereby ensuring the security of the machine to people to some extent.

## Description

### BACKGROUND

### Technical Field

The present invention relates to the field of garden machinery, and in particular, to an automatic lawn mower.

### Related Art

For an existing automatic lawn mower, to prevent the machine from hurting people during working (working conditions that the machine is directly moved by people's hands during working or the machine moves to the people's body during working), a height of a shield outside the machine from the ground is generally lower than 50 mm (a range of a height H of the existing machine from the ground is: 18 mm≤H≤50 mm, and the heights of some machines are lower than 65 mm). Generally, in American, a lawn mower needs to work in dense grass whose height is greater than 100 mm, since a gap between the shield of the machine and the ground is small, resistance of the dense grass to a shell of the machine is large, and the grass is bent by the shield. The machine encounters the backward resistance of the grass to the shield and an upward support force of the grass to the shield, the upward support force reduces positive pressure of the machine to a support surface, adhesion of the machine is reduced consequently, and when the adhesion of the machine is less than the resistance, the machine has poor passability and easily skids in the dense grass. As a result, the machine cannot move forward and an abnormal shutdown is caused.

To resolve the foregoing technical problem, existing technologies generally include increasing a diameter of a driving wheel, increasing a width of a driving wheel, changing a tooth form, or using an all-wheel driving mode. However, in existing solutions, a grip between the machine and the ground is not significantly improved, when the machine works in hard dense grass (for example, American stenotaphrum secundatum), the resistance of the dense grass is far greater than the grip between the machine and the ground, the machine has poor passability and easily skids in the dense grass, and to overcome the resistance of the dense grass, the machine generally requires a large driving force which easily leads to a worn out lawn.

Information disclosed in the related art section is merely for better understanding of the overall background of the present invention, and should not be considered as an acknowledgement or any suggestion that the information constitutes the related art that is well known to a person of ordinary skill in the art.

### SUMMARY

An objective of the present invention is to provide a lawn mower, which can not only reduce resistance of dense grass to the machine when the machine works in high-density grass and improve the passability of the machine, but also can ensure the security of the machine to people.

To achieve the foregoing objective, an embodiment of the present invention provides an automatic lawn mower, including:
a cutting mechanism, arranged on the automatic lawn mower and including a cutting element configured to perform a cutting task;
a first shield, arranged on the automatic lawn mower and at least partially located at a periphery of the cutting element, where in a natural state, a distance X1 between at least a part of a bottom edge of the first shield and a working surface meets: X1≥60 mm; and
a second shield, arranged on the automatic lawn mower and at least partially located between the first shield and the cutting element to protect the cutting element, where in the natural state, a lowest point of the second shield is lower than the first shield, and a distance Y1 between the lowest point and the working surface meets: Y1≤75 mm; and the second shield is configured to move in a direction away from the working surface when a received external force in the direction is greater than a set value.

In one or more embodiments, a distance between a lowest point of the first shield and the working surface is greater than or equal to 60 mm.

In one or more embodiments, X1 meets: X1≥65 mm; or X1≥70 mm.

In one or more embodiments, X1 meets: 60 mm≤X1≤150 mm; or 65 mm≤X1≤105 mm.

In one or more embodiments, in the natural state, a distance X2 between a bottom edge of the first shield that is closest to the working surface and the working surface meets: X2≤75 mm.

In one or more embodiments, a notch for grass to pass through is provided on the first shield, an opening of the notch faces towards the working surface, and a distance K1 between a top end of the notch and the working surface meets: K1≥60 mm. In one or more embodiments, the notch includes at least one of a rectangular notch, a triangular notch, or an arc-shaped notch.

In one or more embodiments, the notch includes a top wall that is horizontally or smoothly arranged and side walls respectively connected to two ends of the top wall, and an angle between the side wall and the top wall is an obtuse angle.

In one or more embodiments, the automatic lawn mower further includes:
a connecting base, detachably connected to the first shield; and a connecting rod, where one end is rotatably connected to the connecting base, and an other end is rotatably connected to the second shield; and
the second shield is provided with a through hole for the connecting base to run through, and the through hole is configured to extend in a moving direction of the second shield under the action of the external force.

In one or more embodiment, in a horizontal direction, a smallest distance Z between an outer edge of the second shield and the cutting element meets: Z≥80 mm.

In one or more embodiments, in a direction perpendicular to the working surface, the second shield has a first projection on the working surface, the cutting element has a second projection on the working surface, the first projection at least partially surrounds the second projection, and a gap exists between the first projection and the second projection.

In one or more embodiments, the first projection 360-degree surrounds the second projection.

In one or more embodiments, the second shield includes an open end, and corresponding, the first projection has an opening; and a self-moving device includes:
a protection tooth or a turning plate, arranged on the first shield and extending towards a housing in a direction approaching the working surface, where in the direction perpendicular to the working surface, the protection tooth or the turning plate has a third projection on the working surface, the third projection is close to the opening, and the second projection is located between the third projection and the first projection;
a distance between a lowest point of the protection tooth and the working surface ranges from 20 mm to 100 mm; or in the natural state, a distance between a lowest point of the turning plate and the working surface ranges from 20 mm to 100 mm.

In one or more embodiments, the automatic lawn mower further includes:
a third shield, arranged between the second shield and the cutting element, where a bottom edge of the third shield is lower than the cutting element.

In one or more embodiments, the cutting mechanism is arranged on a side of a central axis in a traveling direction of the automatic lawn mower.

In one or more embodiments, the automatic lawn mower further includes:
a protection support, arranged between the cutting element and the second shield and arranged on the same side of a body as the cutting mechanism, where
the protection support includes a first protective wall perpendicular to a plane in which the cutting element is located and a second protective wall extending inward from a bottom end of the first protective wall, and the second protective wall is located between the cutting element and the working surface.

In one or more embodiments, in a horizontal direction, a smallest distance between an outer edge of the first shield that is close to the protection support and the cutting element ranges from 15 mm to 80 mm.

In one or more embodiments of the present invention, an automatic lawn mower is provided, including:
a cutting mechanism, arranged in the automatic lawn mower and including a cutting element configured to perform a cutting task;
a protection cover, arranged on the automatic lawn mower and at least partially located at a periphery of the cutting element, where the protection cover moves from a first position to a second position in a direction away from a working surface when a received external force in the direction is greater than a set value;
when the protection cover is located at the first position, a smallest distance G1 between a bottom edge of a protection portion and the working surface meets: G1≤75 mm; and
when the protection cover is located at the second position, a smallest distance G2 between the bottom edge of the protection cover and the working surface meets: G1<G2≤Gmax, where Gmax≥60 mm.

Compared with the related art, in the present invention, a height of the first shield from the ground is greater than or equal to 60 mm, so that resistance of the first shield to tall grass may be reduced, and the passability of the machine may be improved. In addition, the lawn mower is further provided with the second shield, a height of the second shield from the ground is less than or equal to 75 mm, and the second shield may float upward when a received external force is greater than a set value. Arrangement of the second shield further plays a security protection function, and due to the floating design, a decrease in the passability of the machine and skidding of the machine when the height of the second shield from the ground is excessively small are also prevented.

### BRIEF DESCRIPTION OF THE DRAWINGS

FIG. 1 is a cross-sectional view of a lawn mower according to some embodiments.
FIG. 2 is a bottom view of a lawn mower according to some embodiments.
FIG. 3 is a side view of a lawn mower according to some embodiments.
FIG. 4 is a front view of a lawn mower according to some embodiments.
FIG. 5 is a schematic three-dimensional structural diagram of a second shield according to some embodiments.
FIG. 6 is a schematic diagram of a second shield in a natural state according to some embodiments.
FIG. 7 is a schematic diagram of a second shield upraised to a highest position according to some embodiments.
FIG. 8 is a schematic diagram of a state in which a turning plate does not receive an external force according to some embodiments.
FIG. 9 is a schematic diagram of a state in which a turning plate passes through dense grass when a lawn mower moves forward according to some embodiments.
FIG. 10 is a schematic diagram of a state in which a turning plate passes through dense grass when a lawn mower moves backward according to some embodiments.
FIG. 11 is a schematic structural diagram of a second shield 360-degree surrounding peripheries of blades according to some embodiments.
FIG. 12 is a schematic diagram of a state in which a second shield is upraised according to some embodiments.
FIG. 13 is a cross-sectional view of a lawn mower provided with a third shield according to some embodiments.
FIG. 14 is a schematic diagram of a lawn mower with a cutting mechanism arranged on one side according to some embodiments (a testing arm extends to a lower part of the machine).
FIG. 15 is a schematic diagram of a lawn mower with a cutting mechanism arranged on one side according to some embodiments (a foot extends to a lower part of the machine).
FIG. 16 is a schematic diagram of a lawn mower with a cutting mechanism arranged on one side according to some embodiments (a testing arm extends to a lower part of the machine).
FIG. 17 is a schematic diagram of a lawn mower with a cutting mechanism arranged on one side according to some embodiments (a foot extends to a lower part of the machine).
FIG. 18 is a cross-sectional view of a lawn mower with a single outer shield according to some embodiments.
FIG. 19 is a schematic diagram of a state in which an outer shield is upraised according to some embodiments.

### DETAILED DESCRIPTION

The following describes specific implementations of the present invention in detail with reference to the accompanying drawings. However, it should be understood that the protection scope of the present invention is not limited by the specific implementations.

Unless otherwise clearly indicated, in the entire specification and claims, the term "include" or a variant such as "comprise" or "have" should be understood as including the stated element or composition without precluding other elements or other compositions.

A lawn mower is a mechanical tool configured to trim a lawn or vegetation. According to different traveling manners of the lawn mower, the traveling manners may be classified into an automatic traveling manner, a passive traveling manner, or a manner in which automatic traveling and passive traveling are combined.

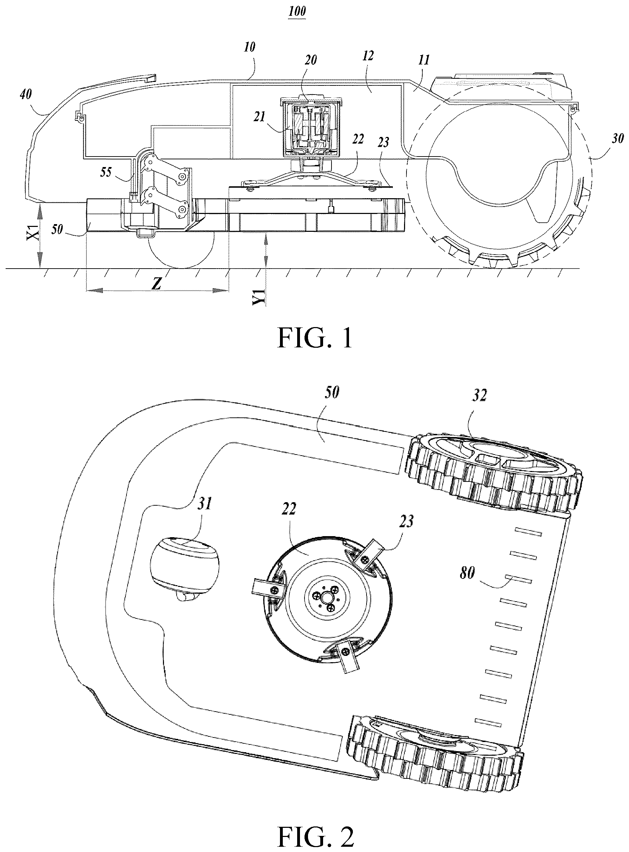

The technical solutions are described in detail by using a lawn mower travels in an automatic traveling manner. As shown in FIG. 1 and FIG. 2, some implementations of the present invention provide a lawn mower, and the lawn mower 100 includes a housing 10, a cutting mechanism 20, a first shield 40, a second shield 50, and a traveling mechanism 30. The lawn mower further includes a circuit board, a battery, and the like, where a control module configured to control the cutting mechanism 20 is arranged on the circuit board, and the battery is configured to at least supply power to the control module, the cutting mechanism 20, and the traveling mechanism 30. The battery generally exists in the form a battery pack, and for example, a lead-acid battery, a nickel-cadmium battery, or a lithium battery may be used.

The cutting mechanism 20 is arranged below the housing 10 and configured to perform a cutting task on a working surface. Optionally, the cutting mechanism 20 includes a motor 21, a cutting deck 22 mounted on an output shaft of the motor 21, and multiple blades (cutting elements) 23 distributed on an edge of the cutting deck 22 in a circumferential direction. The motor 21 is mounted in a space 12 recessed by the housing 10, thickness spaces above and below the housing 10 may be fully utilized, and the blades 23 are located below the housing 10 to cut grass in contact with the blades. During working, the motor 21 may drive the cutting deck 22 and the blades 23 to rotate, to further cut grass around the blades 23. As shown in FIG. 2, in an embodiment, the blades 23 are uniformly fixed on the circumference of the cutting deck 22 to rotate along with the cutting deck 22. In an exemplary embodiment, the cutting mechanism 20 includes 3 blades. In other embodiments, a quantity of the blades may be determined according to an actual situation, and for example, there may be 2, 3, or more blades.

In some embodiments, a description is provided by using an example in which the working surface is the ground. It should be noted that, in other embodiments, the working surface further includes a surface used for planting or growing grass, such as a platform used for planting a lawn.

The control module, the battery, and the motor 21 may be arranged in the same space of the housing 10, for example, the space 12, or may be respectively arranged in different spaces.

The traveling mechanism 30 is supported below the housing 10 and configured to drive the housing 10 and the cutting mechanism 20 to travel along a preset route. In an embodiment, the traveling mechanism 30 includes a front wheel 31 and two rear wheels 32, where the front wheel 31 is arranged at a middle portion of a front end of the housing 10, and the two rear wheels 32 are arranged opposite to each other at a rear end of the housing. The rear wheels 32 serve as driving wheels, and the front wheel is set as a driven wheel. Certainly, a person skilled in the art may alternatively set the front wheel 31 as a driving wheel and set the two rear wheels as driven wheels, and a quantity of wheels may also be set according to an actual situation.

As shown in FIG. 1, the first shield 40 is arranged on the automatic lawn mower and is at least partially located at a periphery of the cutting element (that is, the blade 23), to protect people's feet (for example, children's feet) and protect people's hands during transporting, so as to prevent the people's feet or hands from extending to a bottom portion of the lawn mower and being in contact with the blade 23 which leads to security accidents. A bottom surface of the first shield 40 is approximately located at the same height. In a natural state, a distance between at least a part of a bottom edge of the first shield 40 and the working surface is *X*1 and *X*1 ≥ 60*mm.* For example, X1 may be 60 mm, 65 mm, 70 mm, 80 mm, 90 mm, 100 mm, 105 mm, 120 mm, 130 mm, or 150 mm, and preferably, *X*1 ≥ 65*mm* or *X*1 ≥ 70*mm.* In some other exemplary embodiments, *X*1 meets: 60mm ≤ *X*1 *≤* 150mm or 65*mm* ≤ *X1* ≤ 105mm. By controlling *X1* to be higher than a threshold, the security during grass cutting by the automatic lawn mower may be ensured, and the passability of the lawn mower may also be considered.

As shown in FIG. 1 and FIG. 2, the second shield 50 is arranged on the lawn mower and is at least partially located between the first shield 40 and the blade 23, to protect the cutting element (blade 23) of the cutting mechanism 20. In a natural state, a lowest point of the second shield 50 is lower than the first shield 40, and a distance between the lowest point of the second shield 50 and the working surface is Y1 and Y1 ≤ 75mm. For example, the distance may be 30 mm, 40 mm, 50 mm, or 60 mm, and preferably, 20mm ≤ *Y*1 ≤ 65mm, to achieve balance between the passability and the security protection to people. If the distance from the ground is excessively small, for example, when the distance is 10 mm, the passability of the machine in a traveling process is poor, and a requirement on a movement travel of the second shield 50 in an up-down direction is high; and if the distance from the ground is excessively large, for example, when the distance is 80 mm, the blade 23 may be easily exposed below the second shield, and as a result, a good security protection effect can be hardly achieved. Further, the second shield 50 is configured to move in a direction away from the working surface when a received external force in the direction is greater than a set value.

To prevent dense grass from generation large resistance to the first shield 40 in a traveling process of the machine, in the natural state, a distance between a lowest point of the first shield 40 and the working surface is X and X≥60 mm. For example, X may be 60 mm, 70 mm, 80 mm, 100 mm, 105 mm, 120 mm, 130 mm, or 150 mm, preferably, range from 60 mm to 150 mm, and more preferably, range from 65 mm to 105 mm. By controlling X to be lower than 150 mm helps prevent children's feet from extending into a bottom portion of a self-moving device and being in contact with the cutting element when the children go prone, thereby further improving the security. By controlling the distance of the lowest point of the first shield 40 from the ground to be greater than or equal to 60 mm, when the machine passes through dense grass, the resistance between the first shield 40 and the dense grass may be reduced, which helps the dense grass pass through the first shield 40 and enter the lower part of the housing quickly; and when the distance of the lowest point of the first shield 40 from the ground is less than 60 mm, most dense grass is bent by the first shield 40, the entire resistance is large, which may push the entire machine to be away from the ground. In addition, since the second shield 50 has implemented security protection on the cutting element (the plurality of blades 23 distributed on the edge of the cutting deck 22 in the circumferential direction), the first shield 40 does not need to implement security protection by further reducing the height from the ground, and obstruction between the first shield 40 and the dense grass should be mainly considered in this case.

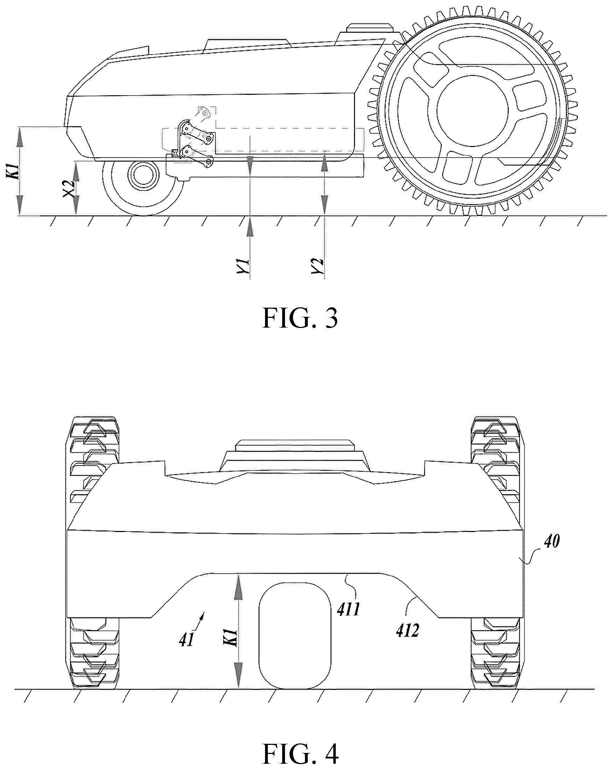

In some embodiments, in the natural state, a distance X2 between a bottom edge of the first shield 40 that is closest to the working surface and the working surface meets: X2 ≤ 75mm. As shown in FIG. 3, the distance X2 of the lowest point of the first shield 40 from the ground meets: 20 mm≤X2≤75 mm. For example, the distance may be 30 mm, 40 mm, 50 mm, or 60 mm. Preferably, in addition to a notch, bottom ends of other parts of the first shield 40 are located at the same height. The first shield 40 forms a main appearance of the machine, so that a height of a bottom end of the first shield 40 from the ground cannot be too large, and the cutting mechanism cannot be exposed from a side perspective as much as possible. In addition, the distance of the lowest point of the first shield 40 from the ground cannot be too small, otherwise, blocking may be generated when the machine passes through an obstacle, which is disadvantageous for the machine to pass through the obstacle stably.

By arranging the two protection structures including the second shield 50 and the first shield 40 and limiting the distance of the lower end of the first shield 40 from the ground to be higher than 60 mm, when the lawn mower passes through tall grass, the dense grass forms no resistance to the first shield 40. In addition, by limiting the distance of the lowest point of the floatable second shield 50 from the ground to be less than or equal to 75 mm, and preferably, to range from 20 mm to 65 mm, the security of the machine to people may be ensured to some extent, and the passability of the automatic lawn mower may be ensured.

In some embodiments, to reduce resistance between the first shield 40 and dense grass, as shown in FIG. 4, the first shield 40 is provided with a notch 41 for the grass to pass through. In a traveling process of the machine, contact resistance is mainly generated between a front end of the first shield 40 in a traveling direction of the lawn mower and the dense grass easily. Therefore, the notch 41 for the dense grass to pass through may be provided upwardly from a bottom edge of the front end of the first shield 40 in the traveling direction, an opening of the notch 41 faces towards the working surface, and a distance *K*1 between a top end of the notch and the working surface meets: *K*1 ≥ 60*mm*, preferably, the distance ranges from 60 mm to 150 mm, and more preferably, the distance ranges from 65 mm to 105 mm. For example, K1 may be 70 mm, 80 mm, 90 mm, or 100 mm.

In some embodiments, the first shield 40 may be the housing 10. The housing 10, serving as a main supporting carrier, is not only configured to carry the cutting mechanism 20, and the housing 10 further forms a protection cavity 11, where the battery (not shown in the figure) configured to supply power to the cutting mechanism 20 and the control module (not shown in the figure) configured to control the cutting mechanism 20 to perform a cutting task may be arranged in the protection cavity 11. The housing 10 has a front end and a rear end that are opposite to each other in a traveling direction thereof and left and right sides adjacent to the front end. For a requirement on a height of the housing 10 from the ground, reference may be made to the first shield 40. For example, to prevent the dense grass from generating large resistance to the housing 10 in a traveling process of the machine, a distance of a lowest point of the housing 10 from the ground is greater than or equal to 60 mm. For example, the distance from the ground may be 65 mm, 70 mm, 80 mm, 100 mm, 105 mm, 120 mm, 130 mm, or 150 mm, preferably, the distance ranges from 60 mm to 150 mm, and more preferably, the distance ranges from 65 mm to 105 mm. The notch 41 for grass to pass through may be provided on the front end of the housing 10. The cutting mechanism 20 partially extends downward out of the housing 10, so that the cutting element (blade 23) is located on a side of the housing 10 that is close to the working surface.

In some embodiments, the first shield 40 is arranged independent of the housing 10. As shown in FIG. 1, the first shield 40 at least covers a part of a top surface of the housing 10, and is arranged on the housing 10 and extends towards an outer side of the housing 10 and in a direction away from the working surface. The first shield 40 and the housing 10 are relatively fixed, and may be fixed by using screws or fasteners. The notch 41 for grass to pass through may be provided on the front end of the first shield 40.

It may be learned through repeated experiments that, a height of the top end of the notch 41 from the ground cannot be too small. When the height from the ground is less than 60 mm, in a certain operation environment, for example, when the dense grass is high, an action force between the dense grass and the notch 41 is large, which affects the cutting efficiency and brings a risk of upraising the entire machine. The height of the notch 41 needs to be as large as possible in principle, which is more advantageous for tall grass to pass through the notch 41. However, for the height of the notch 41, an entire height and the aesthetics of the machine also need to be considered simultaneously.

In this technical solution, a main objective of providing the notch 41 is to reduce an action force between the dense grass and the first shield 40 for the first shield 40 for the dense grass to pass through, so that a distribution width of the notch 41 in a horizontal direction may be determined according to a main acting surface between the front end of the first shield 40 and the dense grass.

In some embodiments, the notch 41 includes at least one of a rectangular notch, a triangular notch, or an arc-shaped notch. Distances of top ends of the rectangular notch, the triangular notch, and the arc-shaped notch from the ground are all greater than or equal to 60 mm. Optionally, the first shield 40 between adjacent notches 41 is partially arrayed in a shape of comb strips or teeth. For example, multiple notches 41 are provided in parallel on the front end of the first shield 40, the first shield 40 between adjacent notches 41 is partially arrayed in the shape of teeth similar to grass combing teeth, and the distance of the top end of each notch 41 from the ground is greater than or equal to 60 mm. In another example, multiple notches 41 are provided in parallel on the front end of the first shield 40, the first shield 40 between adjacent notches 41 is partially arrayed in the shape of comb strips, and the distance of the top end of each notch 41 from the ground is greater than or equal to 60 mm. When the machine passes through dense grass, the dense grass may enter the lower part of the housing through the rectangular notch 41, the triangular notch 41, or the arc-shaped notch 41. In addition, the dense grass entering the bottom portion of the lawn mower may be guided and combed, thereby improving the cutting quality.

In some other embodiments, as shown in FIG. 4, an arch-shaped notch 41 is provided on the front end of the first shield 40, the notch 41 includes a top wall 411 that is horizontally or smoothly arranged and side walls 412 respectively connected to two ends of the top wall 411, and an angle between the side wall 412 and the top wall 411 is an obtuse angle. A distance of the top wall 411 from the ground is greater than or equal to 60 mm, when the machine passes through dense grass, the dense grass enters the lower part of the housing 10 along the top wall 411 and the side walls 412, and since a height of the top wall of the notch 41 from the ground is large, an action force generated between the top wall and the dense grass is small.

In some other embodiments, multiple columns (not shown in the figure) may protrude from a lower end of the first shield 40 in a vertical direction, and a gap between adjacent columns forms the notch 41. The column may be integrally formed with the first shield 40, or may be first formed and then fixed to the first shield 40. The multiple protruding columns form a shape of grass combing teeth and may guide and comb the dense grass entering the bottom portion of the lawn mower, thereby improving the cutting quality.

In some embodiments, a buffer apparatus (not shown in the figure) is arranged on an outer surface of the front end of the first shield 40, to improve anti-collision performance. The buffer apparatus may be an elastic member attached to a surface of the first shield 40 such as a sponge, and the buffer apparatus may further include a protection plate (not shown in the figure) arranged opposite to the first shield 40, where a spring is arranged between the protection plate and the surface of the first shield 40.

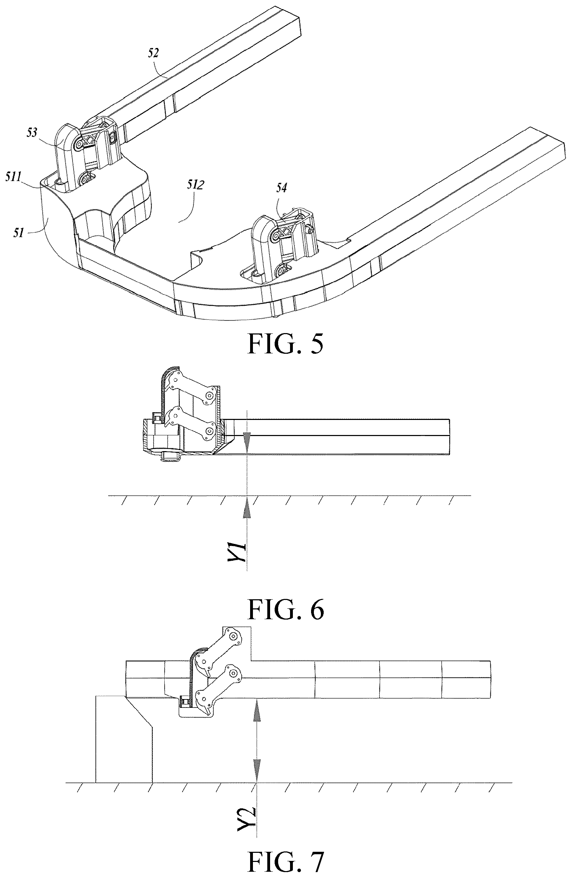

To reduce resistance between the second shield and dense grass, the second shield 50 is configured to move in a direction away from the working surface when a received external force in the direction is greater than a set value. In some embodiments, the second shield 50 is arranged below the housing 10 and protects the cutting mechanism 20. With reference to FIG. 5 and FIG. 6, the second shield 50 protects an outer side of the blade 23 in a horizontal direction, and to reduce the resistance between the second shield 50 and the dense grass, the second shield 50 may move in the up-down direction relative to the housing 10 under the action of an external force. In a traveling process of the machine, a support force of the dense grass to the second shield 50 may push the second shield 50 to move upward, to reduce the resistance of the dense grass to the second shield 50, so that the machine may not skid easily.

The second shield 50 starts to move when a received upward upraising force is greater than a preset value, and for example, the preset value may be 3 N, 5 N, 8 N, or 10 N. The preset value may be set according to gravity of the second shield 50, and when a weight of the second shield 50 is greater than the preset value, a tension spring may be arranged between the second shield 50 and the housing 10; and when the weight of the second shield 50 is less than the preset value, a compression spring may be arranged between the second shield 50 and the housing 10. In normal cases, when people's hands or feet are in contact with the bottom portion of the machine, an upward action force is greater than the preset value, so that the second shield 50 generally does not float, so that a security protection function can be played through blocking.

When the machine performs grass cutting operation on dense grass, especially in a case that the grass is relatively dense, an upward upraising force of the dense grass to the machine is large, and consequently, the entire machine may be easily upraised and skid. However, since the second shield 50 may move in the up-down direction relative to the housing 10 under the action of an external force, when the machine passes through dense grass, an upraising force of the dense grass to the second shield 50 is greater than the preset value, so that the second shield 50 may be driven and upraised. Therefore, a risk that the entire machine is upraised may be avoided, which is advantageous for tall grass to pass through the machine quickly.

An up-down floating distance of the second shield 50 may be set as required according to a space below the housing 10. In an exemplary embodiment, as shown in FIG. 3 and FIG. 7, in a state that the second shield 50 receives an external force and is upraised to a highest position, a distance Y2 of a lower end of the second shield 50 from the ground meets: Y2≥50 mm and Y2 is greater than Y1. In some embodiments, Y2 ranges from 50 mm to 150 mm, and preferably, ranges from 55 mm to 105 mm. For example, the distance may be 60 mm, 70 mm, 80 mm, or 100 mm. A bottom surface of the second shield 50 is approximately located at the same height, and in an upraising process, a height of the bottom surface of the second shield 50 from the ground is the same.

It should be noted that, when the second shield 50 is upraised to the highest position, if a height of the lower end thereof from the ground is less than 50 mm, in an environment that the grass is dense and tall, when the dense grass 60 pushes the second shield 50 to the highest position, a large pushing force may still exist between the dense grass and a bottom end of the second shield, and the pushing force may upraise the entire machine. Therefore, on the premise that a space below the housing 10 may be utilized, when the second shield 50 is located at the highest position, the distance thereof from the ground needs to be as large as possible in principle. The second shield 50 is mainly configured to protect the blade 23 and block people's hands or feet from extending to the lower part of the machine and causing damage. Therefore, in a normal state, the distance of the lower end of the second shield needs to be small, but in the state that the second shield 50 receives an external force and is located at the highest position, the distance thereof from the ground is not limited in this embodiment.

As shown in FIG. 5, the second shield 50 includes a front protection member 51 and side protection members 52 extending from left and right sides of the front protection member 51 in a horizontal direction, where the front protection member 51 protects a front end of the cutting mechanism 20 in the horizontal direction, and the two side protection members 52 respectively protect left and right sides of the cutting mechanism 20 in the horizontal direction. The automatic lawn mower further includes a connecting base 53 and a connecting rod 54. Two ends of the connecting rod 54 are respectively rotatably connected to the connecting base 53 and the front protection member 51, and to control the floating stability of the second shield 50 and prevent offset in the horizontal direction, multiple connecting rods 54 may be arranged, preferably, two connecting rods may be arranged in parallel. The connecting base 53 may be detachably connected to a bottom surface of the housing 10, and in some embodiments, the connecting base 53 is fastened to a bottom end of the housing 10 through a screw 55.

A through hole 511 for the connecting base 53 to run through is provided on the second shield 50 in a vertical direction, and to ensure a strength of the connecting base 53 and reduce a space occupied by the connecting base 53, preferably, the connecting base 53 is set to a shape of a cylinder, where an axis of the cylinder is in the vertical direction.

In some embodiments, to block people's hands or feet from entering the lower part of the machine from the outside, a distance between the second shield 50 and a cutting region also needs to be considered. As shown in FIG. 1, Z is a smallest distance between an outer edge of the second shield 50 and the cutting element (blade 23). When the distance Z is excessively small, for example, 20 mm, people's fingers easily pass through a lower part of the second shield 50 and touch the blade 23 (in this case, the second shield 50 may not be upraised). Therefore, a smallest horizontal distance between the second shield 50 and the cutting region needs to be met. As shown in FIG. 1, in an exemplary embodiment, in the horizontal direction, the smallest distance between the outer edge of the second shield 50 and the cutting region needs to be greater than or equal to 80 mm. The smallest horizontal distance between the outer edge of the second shield 50 and the cutting region needs to be as large as possible in principle. In this way, the security protection effect may be further improved. However, the horizontal distance needs to be properly set according to a size of the machine and spatial arrangement below the housing 10, and to meet a requirement of basic protection, the smallest distance between the outer edge of the second shield 50 and the cutting region is not less than 80 mm in the horizontal direction. It should be noted that, the horizontal direction mentioned in this application indicates a direction parallel to the ground.

To control an interval between the second shield 50 and the cutting mechanism 20 in the horizontal direction, the front wheel 31 is located on an inner side of the front protection member 51, and the front protection member 51 further protects a position of the front wheel 31 in the horizontal direction. To prevent the front protection member 51 from protruding from an outer side of the housing 10, a side of the front protection member 51 facing the front wheel 31 is recessed to form a notch 512, and the front wheel 31 may occupy a space spared by the notch 512.

In other embodiments, the front wheel 31 may alternatively be arranged on an outer side of the front protection member 51 as required. However, in this case, a distance between the front protection member 51 and the cutting mechanism 20 is relatively small, and a space utilization effect and a risk control effect are not optimal.

As shown in FIG. 5, the second shield 50 protects a front end and left and right sides of the blade 23 in the horizontal direction, to block people's hands or feet or another foreign object from entering the lower part of the housing from a front end or two sides of the machine. The entire second shield 50 is U-shaped, and the second shield 50 moves close to or moves away from the bottom surface of the housing 10 during floating in the up-down direction. In terms of projections on the ground, the second shield 50 forms a first projection having a rear (a tail portion of the machine) opening on the ground, a second projection of the blade 23 (cutting element) on the ground is located in the first projection, the first projection at least partially surrounds the second projection, and a gap is formed between an edge of the second projection and an inner edge of the first projection.

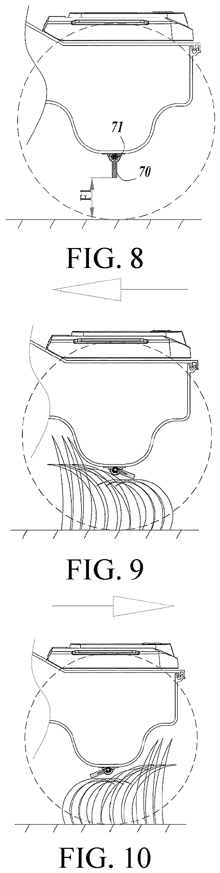

To implement security protection on a rear end of the cutting mechanism 20, as shown in FIG. 8, a turning plate 70 further protrudes downward from a lower part of the rear end of the housing 10. In terms of projections on the ground, a third projection of the turning plate 70 on the ground corresponds to the rear opening of the first projection, the third projection is close to the rear opening of the first projection, and the second projection is located between the third projection and the first projection. Therefore, the second shield 50 and the turning plate 70 together 360-degree protect the blade 23.

A torsion spring 71 is arranged between the turning plate 70 and the housing 10, and the torsion spring 71 provides a restoring force, so that the turning plate 70 is in a vertical direction without receiving an external force. In a state of not receiving an external force, a gap F1 of a bottom end of the turning plate 70 from the ground ranges from 20 mm to 100 mm. For example, F1 may be 30 mm, 40 mm, 60 mm, or the like. A distance of the turning plate 70 from the ground needs to fall within a proper range, when the distance from the ground is excessively small, for example, 10 mm, a friction frequency of a lower end of the turning plate 70 is high and passing resistance is large, and when the distance from the ground is excessively large, for example, 120 mm, a security protection effect of the turning plate 70 to the rear end of the machine is poor.

As shown in FIG. 9 and FIG. 10, when the machine passes through dense grass and the turning plate 70 receives an external action force greater than 5 N, the turning plate 70 may turn, a gap of the turning plate from the ground is increased, and the machine may better pass through the dense grass and obstacles. After turning, a distance of a lowest end of the turning plate 70 from the ground is greater than or equal to 60 mm.

In this technical solution, when people's hands or feet extend to the lower end of the machine and are in contact with the turning plate 70, an action force is generally less than 5 N, so that the turning plate 70 may effectively block people's hands or feet, thereby playing a security protection function on the rear end of the machine.

In some embodiments, the turning plate 70 extends along a straight line between the two rear wheels 32, and a length of the turning plate is greater than a maximum outer diameter of the cutting mechanism 20, thereby implementing protection on the entire cutting mechanism 20 on the rear end of the housing 10.

In some other embodiments, to protect the rear end of the cutting mechanism 20, a protection tooth 80 (as shown in FIG. 2) may further protrude downward from the lower part of the rear end of the housing 10, the protection tooth 80 and the bottom end of the housing 10 are relatively fixed, and the protection tooth 80 has a gap for dense grass to pass through. A gap of a bottom end of the protection tooth 80 from the ground ranges from 20 mm to 100 mm. According to the structure of the protection tooth, people's hands may be prevented from extending into the cutting mechanism 20, and passing through by the dense grass is not affected.

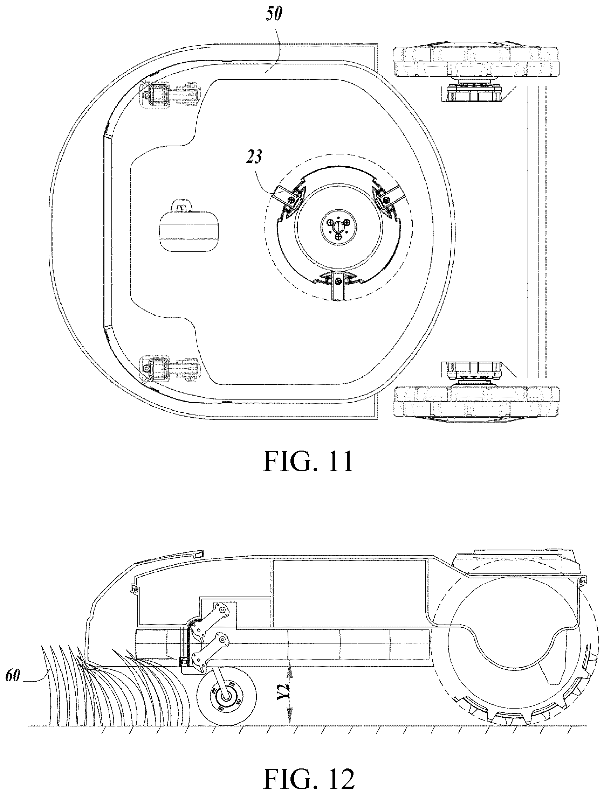

As shown in FIG. 11, in some embodiments, the second shield 50 may 360-degree surround the blade 23 (cutting element), and in terms of projections on the ground, the second shield 50 form an annular projection on the ground. That is, the first projection 360-degree surrounds the second projection. In this embodiment, the rear end of the housing 10 is also protected by the second shield 50, so that arrangement of the turning plate or the protection tooth is not required. In this solution, the second shield 50 can implement omni-directional protection, and setting of one-wheel moving forward and two-wheel moving forward of the lawn mower may also be facilitated.

It should be noted that, the second shield 50 mainly protects the periphery of the blade 23 through a bottom end of the second shield, to prevent people's hands or feet from entering the lower part of the machine through the second shield 50. Therefore, a thickness of the second shield 50 in the up-down direction is not specifically required. On the premise of ensuring a strength of the second shield 50, the thickness of the second shield in the up-down direction needs to be as large as possible in principle, and for example, the thickness thereof may range from 5 mm to 20 mm. In this way, a ground clearance of the housing 10 may be fully utilized without utilizing an internal space of the housing 10. In another embodiment, the second shield 50 may alternatively use a vertical plate-shape structure, and the thickness of the second shield 50 in the up-down direction is large, for example, the thickness in the up-down direction may reach 50 mm. In terms of protection, this structure has a high security coefficient and may further prevent people's hands from entering a space between a top end of the second shield 50 and the bottom end of the housing 10. However, the distance of the housing 10 from the ground is limited, and if the second shield 50 requires a large floating space, the internal space of the housing 10 needs to be further utilized. That is, a groove for the second shield 50 to float needs to be provided at the bottom portion of the housing 10.

In some embodiments, to reduce resistance between the first shield 40 and dense grass, the first shield 40 may move upward and downward relative to the housing 10, and in a state that the first shield 40 does not receive a force, the distance of the first shield 40 from the ground is greater than or equal to 60 mm. Therefore, the first shield 40 may float above the ground by a distance of 60 mm, and a floating height may be set according to factors such as a product size or the aesthetics.

In some embodiments, the first shield 40 and the second shield 50 are respectively movably connected to the housing 10, and the first shield 40 and the second shield 50 may move relative to each other.

In some other embodiments, the first shield 40 and the second shield 50 may be relatively fixed. In this structure, the thickness of the second shield 50 in the vertical direction is greater than 30 mm, the lower end of the first shield 40 and an outer edge of the top end of the second shield 50 are relatively fixed, an edge of the second shield 50 does not protrude from the front end of the housing 10, and a step portion is formed between a lower edge of the first shield 40 and the second shield 50. Therefore, when the second shield is in a natural state, it may be ensured that the distance of the lower end of the first shield from the ground is greater than or equal to 60 mm, and the first shield 40 and the second shield 50 may float upward and downward synchronously. During working, the machine passes through dense grass, since the distance of the first shield 40 from the ground is greater than or equal to 60 mm, the dense grass may smoothly pass through the front end of the first shield 40, and since the distance of the lower end of the second shield 50 from the ground is small in a case that the second shield does not receive a force, the dense grass may act on the second shield 50 and push the second shield 50 to move upward.

As shown in FIG. 12, in some embodiments, during moving of the machine, the first shield 40 is first in contact with the dense grass 60, but since the height of the lower end of the first shield 40 from the ground is greater than or equal to 60 mm, resistance generated by the dense grass 60 to the first shield 40 is small, and even if in an environment that the dense grass is tall, since the first shield 40 may be upraised under pushing by the dense grass, the dense grass 60 may easily pass through the lower part of the first shield 40 and come into contact with the second shield 50; and since the height of the second shield 50 from the ground is small, after coming into contact with the second shield 50, the dense grass 60 may act on the bottom end of the second shield 50 and push the second shield 50 to move upward, so that the dense grass 60 enters the cutting mechanism 20 under small resistance. In this process, the distance of the second shield 50 in the natural state from the ground is small, so that extending of people's hands may be prevented, and the security is high. In addition, the second shield 50 may float upward and downward, so that the dense grass 60 may pass through the second shield smoothly.

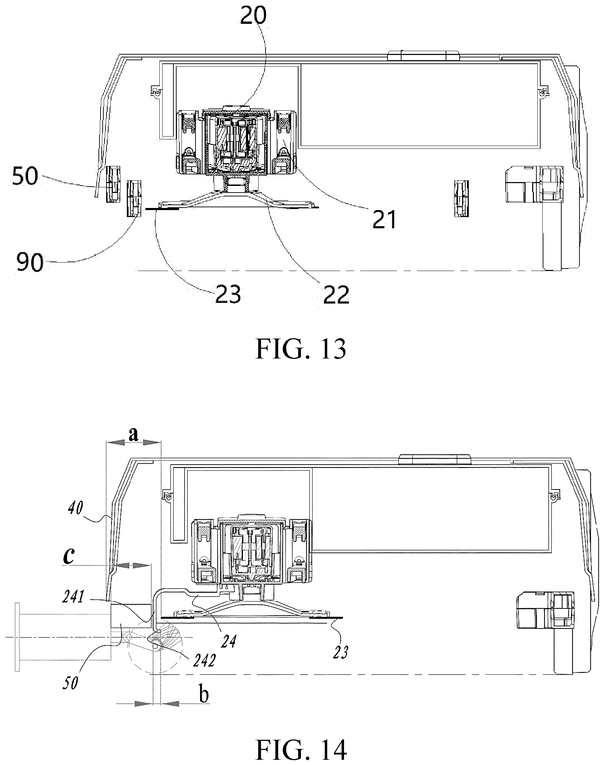

In some embodiments, as shown in FIG. 13, a third shield 90 is arranged between the second shield 50 and the blade 23 (cutting element), a bottom edge of the third shield 90 is lower than the cutting element, and the third shield 90 is static relative to the blade 23 in a height direction. When the third shield 90 is not arranged, to block people's hands or feet from entering the lower part of the machine from the outside, the distance between the second shield and the cutting region needs to meet a basic protection requirement, and in an exemplary embodiment, the smallest distance Z between the outer edge of the second shield 50 and the cutting region is not less than 80 mm in the horizontal direction. After the third shield 90 is arranged between the second shield 50 and the blade 23 (cutting element), the smallest distance Z between the outer edge of the second shield 50 and the cutting region may be less than 80 mm in the horizontal direction, and since the bottom edge of the third shield 90 is lower than the blade 23, even if people's hands or feet enter the lower part of the machine from the outside of the machine and pass through the second shield 50, people's hands or feet may not touch the blade 23 and be hurt. Since the third shield 90 is static relative to the blade 23 in the height direction, if the cutting mechanism 20 in which the blade 23 is located includes a height adjustment mechanism to enable the blade 23 to move upward and downward in the height direction to change a position, the third shield 90 may also move in the height direction along with the blade 23, so that the bottom edge of the third shield 90 is always lower than the blade 23, thereby ensuring the security of the automatic lawn mower.

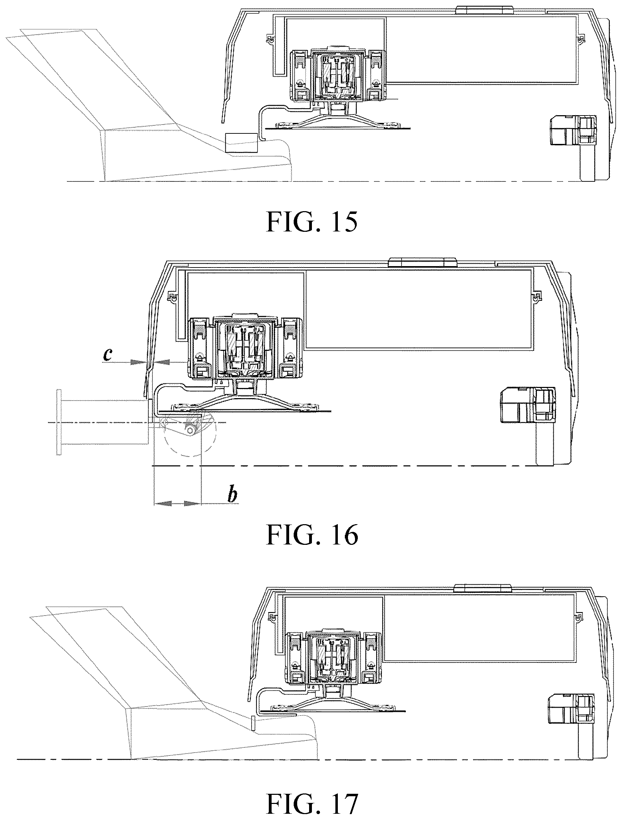

The cutting mechanism 20 may be arranged around a central axis in a traveling direction of the machine. In some embodiments, as shown in FIG. 14 or FIG. 15, the cutting mechanism may alternatively be arranged on a side of the central axis to cut grass at edges, in corresponding embodiments, the second shield 50 may also be arranged on the housing 10 parallel to the side of the central axis in the traveling direction of the machine, and the second shield 50 is arranged between the first shield 40 and the cutting mechanism 20. While grass at edges are cut, people's fingers, arms, or feet are also prevented from extending into the cutting mechanism 20 and being hurt.

In some embodiments, as shown in FIG. 14 and FIG. 15, a protection support 24 is arranged on a side of the cutting mechanism 20 that is close to the second shield 50 and the second shield 50, where the protection support 24 includes a first protective wall 241 extending in the up-down direction and a second protective wall 242 extending inward from a bottom end of the first protective wall 241, and the second protective 242 wall is located between the blade 23 and the ground. When receiving a floating force of grass, since the second protective wall 242 includes a large force receiving surface, the second protective wall may receive a large upraising force from the grass, thereby improving the passability.

The second shield 50 is arranged between the first shield 40 and a side of the first protective wall 241 that faces away from the cutting mechanism 20, and a width c of the second shield 50 in an interval direction between the first shield 40 and the first protective wall 241 ranges from 5 mm to 70 mm. For example, the width may be 10 mm, 20 mm, 30 mm, or 50 mm. The second shield 50 protects the blade 23 to block people's hands or feet from entering the lower part of the machine through the bottom end of the second shield, so that the width c of the second shield 50 cannot be excessively small, and a certain strength needs to be ensured. In addition, the blade 23 needs to be close to an outer edge of the first shield 40 to cut grass at edges well, and considering that the protection support 24 has played a certain protection function, it may be learned through experiments and comparison that, an optimal range of the width c of the second shield 50 is from 5 mm to 70 mm.

In the horizontal direction, a distance (a size for cutting grass at edges) a between the outer edge of the first shield 40 that is close to the protection support 24 and the blade 23 ranges from 15 mm to 80 mm. For example, the distance may be 15 mm, 16 mm, 18 mm, 30 mm, 50 mm, 60 mm, or 70 mm. A size of a needs to fall within a proper range, and if the size is excessively large, for example, greater than 80 mm, a large cutting blind region may exist; and if the size is excessively small, for example, less than 15 mm, the width of the second shield 50 may be affected, and it is difficult to implement an optimal security protection effect.

In the horizontal direction, an extending length b of the second protective wall 242 ranges from 3 mm to 60 mm. The second shield 50 is configured to protect the cutting blade 23, and a security risk has been reduced to some extent. Therefore, the length of the second protective wall 242 is reduced, so that the security of people can be ensured and grass falling can be facilitated, and a skidding risk may be reduced to some extent. However, the length cannot be excessively small, and the security of people can be hardly ensured when the length is less than 3 mm. However, when the length is excessively large, grass falling may be affected and a skidding risk may be increased.

The second protective wall 242 and the second shield 50 together protect the blade 23. When the horizontal length b of the second protective wall 242 is small, referring to FIG. 14 and FIG. 15, for example, when b is 3 mm, the width c of the second shield 50 needs to be set to a large value correspondingly, to increase the distance between the first shield 40 and the blade 23. For example, in this case, c may be 44.2 mm. When the horizontal length b of the second protective wall 242 is large, referring to FIG. 16 and FIG. 17, for example, when b is 54.4 mm, the width c of the second shield 50 may be set to a small value correspondingly, to implement a better effect of cutting grass at edges. For example, in this case, c may be 5 mm.

In some other embodiments, the second protective wall 242 may alternatively protrude from an outer side of the first protective wall 241, and the second protective wall 242 may be arranged on both an inner side and the outer side of the first protective wall 40.

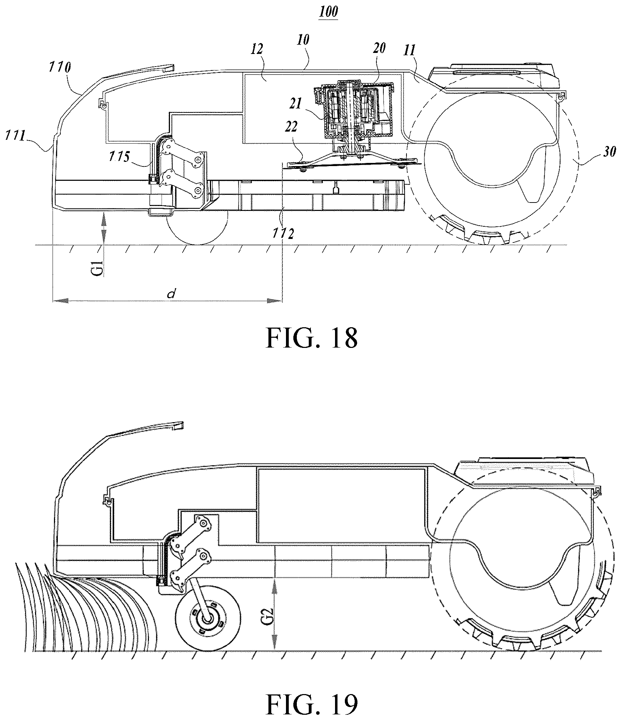

In some embodiments, as shown in FIG. 18 and FIG. 19, an automatic lawn mower is further provided, including: a cutting mechanism 20 arranged on the lawn mower, where the cutting mechanism 20 includes a cutting element (blade 23) configured to perform a cutting task; a protection cover, arranged on the lawn mower and at least partially located at a periphery of the blade 23, where the protection cover may move from a first position to a second position in a direction away from a working surface when a received external force in the direction is greater than a set value. When the protection cover is located at the first position, a smallest distance G1 between a bottom edge thereof and the working surface meets: *G*1 ≤ 75mm. When the protection cover is located at the second position, a smallest distance *G*2 between the bottom edge of the protection cover and the working surface meets: *G*1 < *G*2 ≤ *Gₘₐₓ*, where *Gₘₐₓ* ≥ 60*mm.*

In some embodiments, the protection cover may be an outer shield 110 (only one shield is arranged, and no inner shield is arranged) floating upward and downward relative to the housing 10. The outer shield 110 is arranged on an outer side of the blade 23, and may play a security protection function by protecting the blade 23 (preventing people's hands or feet from extending from a side bottom portion of the machine).

The outer shield 110 starts to move when a received upward upraising force is greater than a preset value, and for example, the preset value may be 3 N, 5 N, 8 N, or 10 N. The preset value may be set according to gravity of the outer shield 110, and when a weight of the outer shield 110 is greater than the preset value, a tension spring may be arranged between the outer shield 110 and the housing 10; and when the weight of the outer shield 110 is less than the preset value, a compression spring may be arranged between the outer shield 110 and the housing. In normal cases, when people's hands or feet are in contact with the bottom portion of the machine, an upward action force (generally less than 5 N) is greater than the preset value, so that the outer shield 110 generally does not float, so that a security protection function can be played through blocking.

When the machine performs grass cutting operation on dense grass, especially in a case that the grass is relatively dense, an upward upraising force of the dense grass to the machine is large, and consequently, the entire machine may be easily upraised and skid. However, since the outer shield 110 may move in the up-down direction relative to the housing 10 under the action of an external force, when the machine passes through dense grass, an upraising force of the dense grass to the outer shield 110 is greater than the preset value, so that the outer shield 110 may be driven and upraised. Therefore, a risk that the entire machine is upraised may be avoided, which is advantageous for the lawn mower to pass through the dense grass smoothly.

As shown in FIG. 17, in a state that the outer shield 110 does not receive an external force, that is, in a natural state (the first position), the outer shield 110 is located at a position with a smallest height from the ground. In this case, a distance G1 of a lowest point of the outer shield 110 from the ground meets: *G*1 ≤ 75*mm*, and preferably, 20 mm≤G1≤65 mm. For example, G1 may be 30 mm, 40 mm, 50 mm, 60 mm, or the like. However, if the distance from the ground is excessively small, for example, when the distance is 10 mm, the machine has poor passability in a traveling process, and a requirement on a movement travel of the outer shield 110 in an up-down direction is high; and if the distance from the ground is excessively large, for example, when the distance is 80 mm, the blade 23 may be easily exposed below the outer shield 110, and as a result, a good security protection effect can be hardly achieved.

As shown in FIG. 19, when the outer shield 110 receives an external force and is in a state of being located at a highest position (the second position), a distance G2 of the lowest point of the outer shield 110 from the ground meets: G2≥60 mm, and G2 is greater than G1. In some embodiments, G2 ranges from 60 mm to 150 mm, and preferably, ranges from 75 mm to 105 mm. For example, the distance G2 from the ground may be 60 mm, 70 mm, 80 mm, 90 mm, 100 mm, 120 mm, 130 mm, or 150 mm, to prevent children's feet from extending into a bottom portion of a self-moving device and being in contact with the blade 23 when the children go prone, thereby further improving the security.

To block people's hands or feet from entering the lower part of the machine from the outside, a distance d between the outer shield 110 and a cutting region also needs to be considered. When the distance is excessively small, for example, 20 mm, people's fingers easily pass through a lower part of the outer shield 110 and touch the blade 23 (in this case, the outer shield may not be upraised), which may bring a risk. Therefore, a smallest horizontal distance between the outer shield 110 and the cutting region needs to be met. As shown in FIG. 17, in an exemplary embodiment, in a horizontal direction, the smallest distance d between an outer edge of the outer shield 110 and the cutting region needs to be greater than 80 mm. The smallest horizontal distance between the outer edge of the outer shield 110 and the cutting region needs to be as large as possible in principle. In this way, the security protection effect may be further improved. However, the horizontal distance needs to be properly set according to a size of the machine and spatial arrangement below the housing 10, and to meet a requirement of basic protection, through security tests, the smallest horizontal distance between the outer edge of the outer shield 110 and the cutting region should not be less than 80 mm. It should be noted that, the horizontal direction mentioned in this application indicates a direction parallel to the ground.

Further, the outer shield 110 includes a cover body 111 and a bottom plate 112, the bottom plate 112 protects a front end and left and right sides of the blade 23, to prevent people's hands or feet or another foreign object from entering the lower part of the housing from a front end or two sides of the machine. The entire bottom plate 112 is U-shaped, and the bottom plate 112 moves close to or moves away from the bottom surface of the housing 10 during floating in the up-down direction. In terms of projections on the ground, in a vertical direction, the outer shield 110 forms a first projection having a rear (a tail portion of the machine) opening on the ground, a second projection of the blade 23 on the ground is located in the first projection, and a gap is formed between an edge of the second projection and an inner edge of the first projection.

The cover body 111 extends upward from an edge of the bottom plate 112 and covers a part of a top surface of the housing 10. During floating in the up-down direction, the cover body 111 moves close to or moves away from the top surface of the housing 10, and the cover body 111 surrounds the top surface and two sides of the housing, thereby further playing a protection function and improving the aesthetics. The cover body 111 and the bottom plate 112 may be assembled or may be integrally formed.

When the outer shield 110 does not receive a force, the outer shield 110 is in a free state, a distance of a bottom end of the outer shield 110 from the ground is minimized, and the distance from the ground ranges from 20 mm to 75 mm, so that the machine may be prevented from causing damage to people during working. When the outer shield 110 is in contact with dense grass, a lower end of the outer shield 110 is pushed by the dense grass and moves upward relative to the housing 10. In this case, resistance of the dense grass to the housing 10 is reduced. Therefore, the machine can still remain certain adhesion to the ground and may not skid in the dense grass easily.

According to the foregoing automatic lawn mower, the shield may float upward and downward, and a distance from the ground of the shield in a natural state and a distance from the ground when the shield is upraised may be controlled, so that when the machine works in dense grass, resistance of the dense grass to the machine is reduced. Therefore, the passability of the lawn mower is improved, and the security of the machine to people is ensured to some extent.

The foregoing descriptions of specific exemplary implementations of the present invention are provided for explanation and illustration purposes. The descriptions are not intended to limit the present invention to the precise form disclosed herein, and apparently, many changes and variations may be made according to the foregoing teachings. Objectives of selecting and describing the exemplary embodiments are to explain specific principles and actual applications of the present invention, so that a person skilled in the art can implement and utilize various different exemplary implementations of the present invention and various different selection and changes thereof. A scope of the present invention is limited by the claims and equivalents thereof.

## Claims

1. An automatic lawn mower, comprising:
a cutting mechanism, arranged on the automatic lawn mower and comprising a cutting element configured to perform a cutting task;
a first shield, arranged on the automatic lawn mower and at least partially located at a periphery of the cutting element, wherein in a natural state, a distance X1 between at least a part of a bottom edge of the first shield and a working surface meets: X1≥60 mm; and
a second shield, arranged on the automatic lawn mower and at least partially located between the first shield and the cutting element to protect the cutting element, wherein in the natural state, a lowest point of the second shield is lower than the first shield, and a distance Y1 between the lowest point and the working surface meets: Y1≤75 mm; and the second shield is configured to move in a direction away from the working surface when a received external force in the direction is greater than a set value.

2. The automatic lawn mower according to claim 1, wherein a distance between a lowest point of the first shield and the working surface is greater than or equal to 60 mm.

3. The automatic lawn mower according to any one of claims 1 and 2, wherein X1 meets: X1≥65 mm; or X1≥70 mm.

4. The automatic lawn mower according to any one of claims 1 and 2, wherein X1 meets: 60 mm≤X1≤150 mm; or 65 mm≤X1≤105 mm.

5. The automatic lawn mower according to any one of claims 1 and 2, wherein in the natural state, a distance X2 between a bottom edge of the first shield that is closest to the working surface and the working surface meets: X2≤75 mm.

6. The automatic lawn mower according to claim 1, wherein a notch for grass to pass through is provided upwardly from a bottom edge of a front end of the first shield in a traveling direction, an opening of the notch faces towards the working surface, and a distance K1 between a top end of the notch and the working surface meets: K1≥60 mm.

7. The automatic lawn mower according to claim 6, wherein the notch comprises at least one of a rectangular notch, a triangular notch, or an arc-shaped notch.

8. The automatic lawn mower according to claim 6, wherein the notch comprises a top wall that is horizontally or smoothly arranged and side walls respectively connected to two ends of the top wall, and an angle between the side wall and the top wall is an obtuse angle.

9. The automatic lawn mower according to claim 1, further comprising:
a connecting base, detachably connected to the first shield; and a connecting rod, wherein one end is rotatably connected to the connecting base, and an other end is rotatably connected to the second shield; and
the second shield is provided with a through hole for the connecting base to run through, and the through hole is configured to extend in a moving direction of the second shield under the action of the external force.

10. The automatic lawn mower according to claim 1, wherein in a horizontal direction, a smallest distance Z between an outer edge of the second shield and the cutting element meets: Z≥80 mm.

11. The automatic lawn mower according to claim 1, wherein in a direction perpendicular to the working surface, the second shield has a first projection on the working surface, the cutting element has a second projection on the working surface, the first projection at least partially surrounds the second projection, and a gap exists between the first projection and the second projection.

12. The automatic lawn mower according to claim 11, wherein the first projection 360-degree surrounds the second projection.

13. The automatic lawn mower according to claim 11, wherein the second shield comprises an open end, and corresponding, the first projection has an opening; and the automatic lawn mower further comprises:
a protection tooth or a turning plate, arranged on the first shield and extending towards a housing in a direction approaching the working surface, wherein in the direction perpendicular to the working surface, the protection tooth or the turning plate has a third projection on the working surface, the third projection is close to the opening, and the second projection is located between the third projection and the first projection;
a distance between a lowest point of the protection tooth and the working surface ranges from 20 mm to 100 mm; or in the natural state, a distance between a lowest point of the turning plate and the working surface ranges from 20 mm to 100 mm.

14. The automatic lawn mower according to claim 1, further comprising:
a third shield, arranged between the second shield and the cutting element, wherein a bottom edge of the third shield is lower than the cutting element.

15. The automatic lawn mower according to claim 1, wherein the cutting mechanism is arranged on a side of a central axis in a traveling direction of the automatic lawn mower.

16. The automatic lawn mower according to claim 15, further comprising:
a protection support, arranged between the cutting element and the second shield and arranged on the same side of the central axis as the cutting mechanism, wherein
the protection support comprises a first protective wall perpendicular to a plane in which the cutting element is located and a second protective wall extending inward from a bottom end of the first protective wall, and the second protective wall is located between the cutting element and the working surface.

17. The automatic lawn mower according to claim 16, wherein in a horizontal direction, a smallest distance between an outer edge of the first shield that is close to the protection support and the cutting element ranges from 15 mm to 80 mm.

18. An automatic lawn mower, comprising:
a cutting mechanism, arranged in the automatic lawn mower and comprising a cutting element configured to perform a cutting task;
a protection cover, arranged on the automatic lawn mower and at least partially located at a periphery of the cutting element, wherein the protection cover moves from a first position to a second position in a direction away from a working surface when a received external force in the direction is greater than a set value;
when the protection cover is located at the first position, a smallest distance G1 between a bottom edge of a protection portion and the working surface meets: G1≤75 mm; and
when the protection cover is located at the second position, a smallest distance G2 between the bottom edge of the protection cover and the working surface meets: G1<G2≤Gmax, wherein Gmax≥60 mm.
